# EUROPEAN PATENT APPLICATION

(11) **EP 1 983 369 A1**
(43) Date of publication of application: **22.10.2008**
(21) Application number: 08153487.7
(22) Date of filing: 28.03.2008
(51) Int. Cl.: G02F 1/31

(54) **Bistable liquid crystal optical device**

(30) Priority: 18.04.2007 US 737070
(71) Applicant: Avanex Corporation, Fremont, CA 94538 (US)
(72) Inventor: Barbarossa, Giovanni, Saratoga CA 95070 (US)
(74) Representative: Gauer, Pierre

(57) **Abstract**

A bistable liquid crystal-based optical device (101) operates with reduced or zero power consumption and maintains a switching state during power loss. The optical device includes a bistable liquid crystal material (105) that maintains a stable molecular orientation in the absence of an electrical field. The optical device further includes a beam steering device (102) positioned downstream of the liquid crystal, such as a birefringent crystal or Wollaston prism. The molecular orientation of the liquid crystal modulates the polarization state of an incident light beam (108), and the beam steering device directs the beam along a first optical path (110A), a second optical path (110B), or both paths, based on the polarization state of the light.

## Description

### BACKGROUND OF THE INVENTION

### Field of the Invention

Embodiments of the present invention relate generally to optical communication systems and components and, more particularly, to bistable liquid crystal optical devices.

### Description of the Related Art

In an optical communication system having multiple channels, it is often necessary to add or drop a channel in optical links or networks. This can be achieved by an optical switch, a device which directs an input light beam onto one of multiple output optical paths. For example, in a 1 by 2 optical switch, an input light beam enters through an input fiber and is directed to one of two output fibers. There are also more complicated optical switches, such as 2 by 2, 1 by N, and N by N optical switches, which are realized by combining several 1 by 2 optical switches.

A mechanical optical switch is one means for redirecting a light beam along different optical paths in optical communications systems. A mechanical optical switch has a movable optical part, such as a prism, mirror, or segment of optical fiber, which can be positioned to direct a light beam along one or more alternate optical paths. Drawbacks of mechanical optical switches include slow switching speeds and problematic reliability. Therefore, there has been an ongoing effort in the development of non-mechanical switches for use in optical communications systems.

One non-mechanical optical switch employs a liquid crystal (LC) material. When a potential difference is applied across an LC material, the molecular orientation of the liquid crystals in the LC material becomes aligned in a known direction. Because the molecular orientation of an LC material changes the plane of incident polarized light, the application of a potential difference across a cell containing an LC material may be used to modulate the polarization of polarized light passing through the cell. For example, in a first state, wherein a potential difference of zero V is applied and maintained across the LC cell, linearly polarized light passing therethrough is rotated 90°. In a second state, wherein a predetermined potential difference, e.g., 5 volts, is applied across the LC cell, linearly polarized light passes therethrough unchanged. Depending on the polarization state of the light beam, the light beam may then be directed along one of two optical paths. Therefore, the selective switching of the beam is based on the polarization of the light beam as modulated by the LC cell. Commonly assigned U.S. Patent No. 6,594,082 describes an LC cell used to modulate polarization in a non-mechanical optical switch.

One problem with LC-based optical switches is the stability of molecular orientation in an LC induced by a potential difference across the LC. When the potential difference is removed, the molecular orientation of the liquid crystals becomes random. As a result, a potential difference must be continuously applied across the LC material in order to maintain the desired performance of the LC optical switch, leading to undesirable energy consumption. In addition, if an accidental loss of power occurs, the orientation of the LCs becomes randomized and alters the switching configuration of the LC optical switch.

Accordingly, there is a need for a non-mechanical optical switch having a polarization modulator that maintains switching configuration without an applied electric field.

### SUMMARY OF THE INVENTION

Embodiments of the present invention provide a bistable liquid crystal-based optical device that operates with reduced power consumption and maintains a switching state during power loss. The optical device includes a bistable liquid crystal material that maintains a stable molecular orientation in the absence of an electrical field. The optical device further includes a beam steering device positioned downstream of the liquid crystal, such as a birefringent crystal or Wollaston prism. The molecular orientation of the liquid crystal modulates the polarization state of an incident light beam, and the beam steering device directs the beam along a first optical path, a second optical path, or both paths, based on the polarization state of the light.

An optical device according to an embodiment of the present invention receives a light beam through an input port and selectively directs the light beam to one of multiple output ports, and includes a liquid crystal cell having a first stable state and a second stable state positioned in an optical path of the light beam and an optical element positioned in the optical path of the light beam for changing the optical path of the light beam based on a polarization state of the light beam. The liquid crystal cell polarizes the light beam to have a first polarization state when the liquid crystal cell is in the first stable state and polarizes the light beam to have a second polarization state when the liquid crystal cell is in the second stable state. The optical element may be a bi-refringent crystal or a Wollaston prism, and the LC cell may include one of cholesteric, smectic and nematic bistable liquid crystals.

Embodiments of the present invention further provide an optical communication device that includes a bistable liquid crystal-based optical device. The optical communications device may be any one of a wavelength selective switch, a variable optical attenuator, an optical add-drop multiplexer, and a dynamic gain equalizer.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figures 1A and 1B schematically illustrate cross sectional views of LC-based optical switches according to embodiments of the invention.

Figure 2A illustrates a schematic side view of a wavelength selective switch in accordance with one embodiment of the invention.

Figure 2B shows a partial side view of the wavelength selective switch of Figure 2A.

Figure 3A is a perspective view of a wavelength selective switch according to another embodiment of the invention.

Figure 3B illustrates a schematic side view of a beam polarization unit used in the wavelength selective switch of Figure 3A.

Figure 4 schematically illustrates a bistable LC-containing variable optical attenuator in accordance with one embodiment of the invention.

Figures 5A and 5B schematically illustrate top plan and side views, respectively, of a bistable LC-based optical add-drop multiplexer in accordance with one embodiment of the invention.

Figure 6 is a conceptual block diagram of a dynamic gain equalizer system that incorporates an LC optical device according to an embodiment of the invention.

For clarity, identical reference numerals have been used, where applicable, to designate identical elements that are common between figures. It is contemplated that features of one embodiment may be incorporated in other embodiments without further recitation.

### DETAILED DESCRIPTION

Aspects of the invention contemplate LC-based optical devices that require less power to operate than prior art devices, including some that require zero power to operate, and that maintain switching and attenuation performance in the absence of an applied electric field.

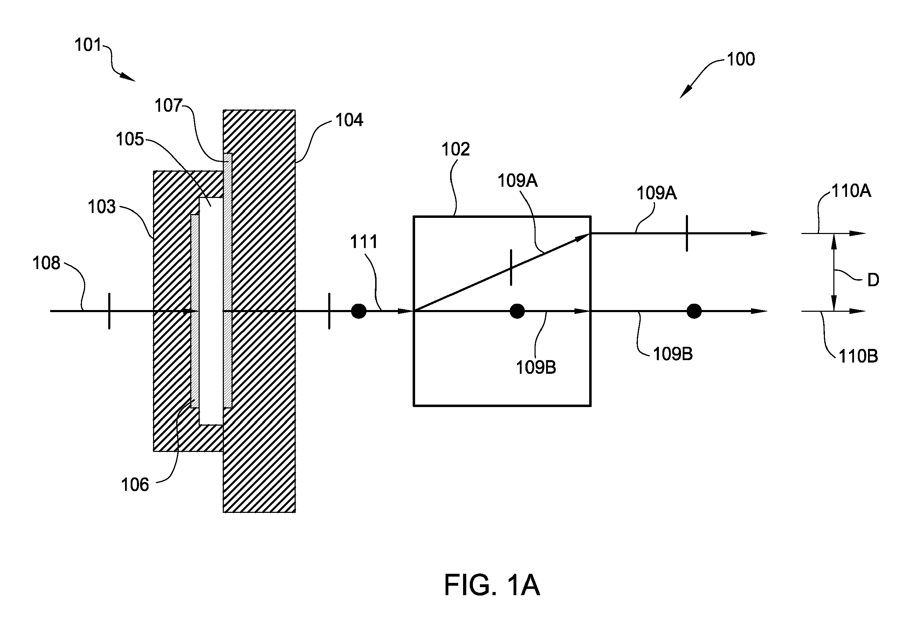

Figure 1A schematically illustrates a cross sectional view of an LC-based optical switch according to an embodiment of the invention. An LC optical switch 100 includes an LC assembly 101 and a birefringent beam steering unit 102. In the example shown, LC assembly 101 includes two transparent plates 103, 104, which are laminated together to form LC cavity 105. LC cavity 105 contains a bistable LC material, described below. LC assembly 101 also includes two transparent electrodes 106, 107, which are configured to apply a potential difference across LC cavity 105, thereby aligning the LCs in LC assembly 101 to be oriented in a first direction, a second direction or somewhere between these two directions. Transparent electrodes 106, 107 may be patterned from indium-tin oxide (ITO) layers, as well as other transparent conductive materials. Birefringent beam steering unit 102 is a birefringent beam displacer, such as a YVO₄ cube. Birefringent beam steering unit 102 is oriented to separate a linearly polarized beam 111 directed from LC assembly 101 into two polarized beams 109A, 109B, wherein each has a polarization state orthogonal to the other, i.e., p- and s-polarized. In the example shown in Figure 1A, polarized beam 109A is p-polarized (denoted by the vertical line through the arrow representing polarized beam 109A), and polarized beam 109B is s-polarized (denoted by a dot).

As noted above, LC cavity 105 contains a bistable LC material that can maintain one of two distinct stable molecular orientations without continuous application of an electric field. In a first stable state wherein the LC material is at a first molecular orientation, LC assembly 101 rotates the polarization of incident light 90°. In a second stable state wherein the LC material is at a second molecular orientation, LC assembly 101 allows incident light to pass through unchanged. In some applications, LC cavity 105 may contain a bistable LC material capable of bistable gray levels, i.e., maintaining intermediate molecular orientations between the first and second states without continuous application of an electric field. Hence, LC assembly 101 may also be configured to modulate the polarization of incident light as desired between the s- and p- polarization states. The method by which a desired molecular orientation of the LC material in LC assembly 101 is "set" depends on the particular bistable LC material used.

Examples of bistable LCs that can be used include nematic LCs and cholesteric LCs. For a bistable nematic LC, such as BiNem^{®}, the molecular orientation of the LC depends on the pulse waveform of the potential difference applied across transparent electrodes 106, 107. By switching off the potential difference applied across transparent electrodes 106, 107 quickly, i.e., on the microsecond (µsec) scale, the LC molecules are fixed in a half-turn twisted state, thereby producing a 90° rotation in polarization of incident light. A progressive decrease of the electric field between transparent electrodes 106, 107, *i.e.,* on the 100 µsec timescale, leads to a uniform texture of the LC material and no rotation of incident light polarization. For a bistable cholesteric LC, the form and amplitude of the driving electric field pulse between transparent electrodes 106, 107 dynamically controls the selection of the final state of the LC material and, therefore, the molecular orientation thereof.

Persons skilled in the art will recognize that bistable nematic and cholesteric LCs, as well as any other kinds of bistable LC, such as zenithal and smectic, may be used in LC assembly 101. The choice of bistable LC depends on the demands of the application, e.g., long-term stability, high shock resistance, or specific optical properties, as well as on the operating conditions of the device, e.g., applied voltage range, operating temperature, etc.

In operation, LC optical switch 100 conditions a linearly polarized input beam 108 to form one or two polarized beams 109A, 109B, as shown in Figure 1A. LC optical switch 100 then directs polarized beam 109A along optical path 110A and polarized beam 109B along optical path 110B. For a switching operation, in which a beam is routed along one of two optical paths, LC optical switch 100 converts all of the optical energy of input beam 108 to either polarized beam 109A or 109B. For an attenuating operation, LC optical switch 100 converts a portion of the optical energy of input beam 108 into polarized beam 109A and a portion into polarized beam 109B, as required.

In the example illustrated in Figure 1A, input beam 108 is a beam of p-polarized light, denoted by a vertical line through the arrow representing input beam 108. Input beam 108 passes through LC assembly 101 and is directed through the LC contained in LC cavity 105 to produce linearly polarized beam 111. When input beam 108 passes through LC cavity 105, the polarization state of the beam may be rotated 90°, left unchanged, i.e., rotated 0°, or modulated somewhere in between, depending on the molecular orientation of the LC material contained in LC cavity 105. Therefore, linearly polarized beam 111 may contain an s-polarized component and a p-polarized component. Birefringent beam steering unit 102 produces polarized beam 109A from the p-polarized component of linearly polarized beam 111, and polarized beam 109B from the s-polarized component of linearly polarized beam 111, as shown in Figure 1A. Birefringent beam steering unit 102 is oriented to direct polarized beam 109A along optical path 110A and polarized beam 109B along optical path 110B, where optical paths 110A, 110B are parallel optical paths separated by a displacement D. The magnitude of displacement D is determined by the geometry and orientation of birefringent beam steering unit 102.

By utilizing bistable liquid crystals as described above, LC optical switch 100 can perform switching and attenuation of optical signals with low power consumption. Further, in the event of power loss, LC optical switch 100 maintains switching configuration.

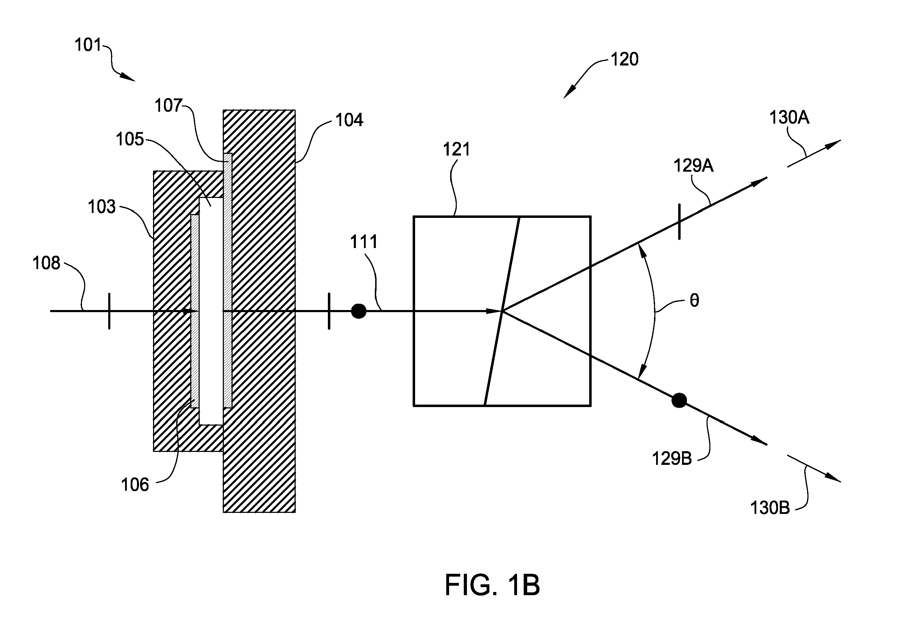

Figure 1B schematically illustrates a cross sectional view of an LC-based optical switch according to another embodiment of the invention. An LC optical switch 120 includes an LC assembly 101 and a Wollaston prism 121. The organization and operation of LC assembly 101 is described above in conjunction with Figure 1A. Wollaston prism 121 serves as an angular displacer similar in function to birefringent beam steering unit 102 of LC optical switch 100, directing the optical energy of linearly polarized beam 111 along optical path 130A, optical path 130B, or both. As shown in Figure 1B, Wollaston prism 121 converts p-polarized light contained in linearly polarized beam 111 into beam 129A, and s-polarized light contained in linearly polarized beam 111 into beam 129B. Wollaston prism 121 produces an angular displacement, θ, between optical paths 129A, 129B. In other aspects, the operation of LC optical switch 120 is substantially the same as LC optical switch 100. Hence, LC optical switch 120 may be used for switching and/or attenuation of optical signals without the continuous application of an electric field.

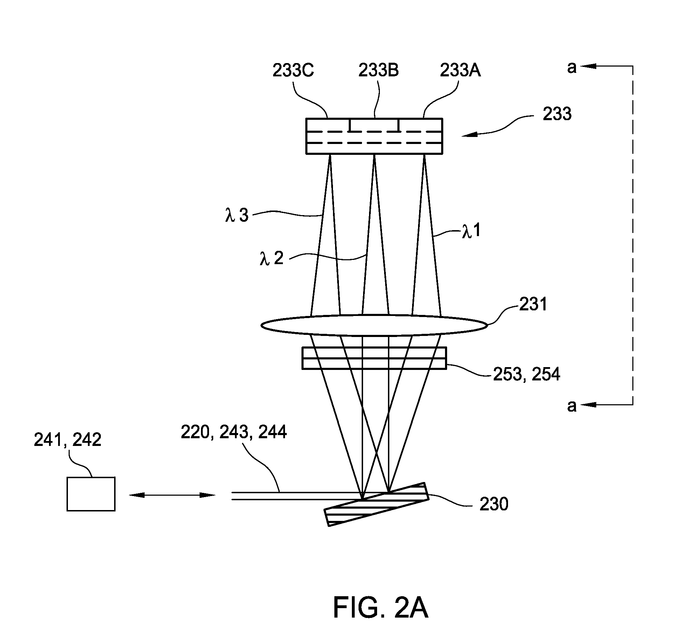

Figure 2A illustrates a schematic plan view of a wavelength selective switch (WSS) in accordance with one embodiment of the invention. WSS 200 includes a diffraction grating 230, a lens 231, an array 233 of LC-based polarization steering devices 233A-C, and absorptive polarizers 253, 254. Absorptive polarizers 253, 254 are designed to transmit light of a single polarization, and to absorb or reflect all other incident light. One example of absorptive polarizer is the wire-grid polarizer.

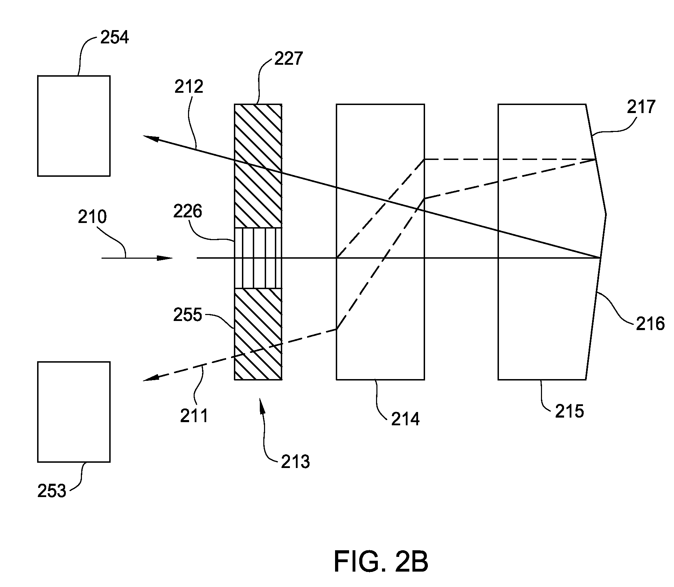

A collimated input beam 220 is first spatially separated into wavelength channels λ1-λ3 by diffraction grating 230, and are optically coupled to lens 231 by passing pass between absorptive polarizers 253, 254. Absorptive polarizers 253, 254 are located below and above the plane of collimated input beam 220, respectively. The relative vertical positions of collimated input beam 220, output beams 221, 222, and absorptive polarizers 253, 254 are described below in conjunction with Figure 2B. Lens 231 then focuses wavelength channels λ1-λ3 onto polarization steering devices 233A-C, respectively, of array 233. Each of polarization steering devices 233A-C is a separate, independently controlled element of array 233, and is configured to steer and/or attenuate a light beam incident thereon. Steering of light beams consists of rotating the polarization of incident light either 0° or 90°, and then directing the light along either of two optical paths based on the resultant polarization of the light. Attenuation of light beams consists of further modulating the polarization of the redirected light. Diffraction grating 230 is shown to separate input beam 220 into three wavelength channels λ1-λ3. However, in practice, the number of optical channels contained in input beam 220 and of the corresponding polarization steering devices of array 233 may be up to 50 or more.

Figure 2B shows a partial side view of WSS 200, taken from view a-a as indicated in Figure 2A. For simplicity, the organization and operation of polarization steering device 233A and the interaction thereof with wavelength channel λ1 is described. It is understood that steering devices 233B, 233C operate substantially the same as polarization steering device 233A and interact in a similar fashion with wavelength channels λ2, λ3, respectively. Lens 231 is omitted from Figure 2B for clarity.

Polarization steering device 233A includes a polarization modulator 213, a birefringent polarization beam displacer 214, and an angled reflector 215. In the example illustrated in Figure 2B, polarization modulator 213 consists of three independently controlled LC pixels 225, 226, and 227, wherein each LC pixel may be controlled independently, and may be substantially similar in organization and operation to LC assembly 101, described above in conjunction with Figure 1A. Namely, LC pixels 225, 226, and 227 each contain a bistable LC material, thereby allowing WSS 200 to perform optical switching with low power consumption and to maintain a routing configuration upon loss of power. Birefringent polarization beam displacer 214 is a planar parallel uni-axial crystal plate with its optical axis parallel to the page as viewed in Figure 2B. Angled reflector 215 consists of two reflective surfaces 216 and 217. Incident beam 210 and output beams 221, 222 as shown in Figure 2B, correspond to wavelength channel λ1 of Figure 2A.

In operation, incident beam 210 passes through LC pixel 226 of polarization modulator 213 and is either s- or p-polarized, depending on the molecular orientation of the bistable LC material contained in LC pixel 226. If incident beam 210 is s-polarized by LC pixel 226, the beam is not displaced by beam displacer 214 and is reflected by surface 216, forming output beam 212. Polarization steering device 133A is configured so that output beam 212 is directed through LC pixel 227, which may modulate the polarization of output beam 212 as necessary for the beam to be attenuated by absorptive polarizer 254. Alternatively, if incident beam 210 is p-polarized by LC pixel 226, the beam is displaced by birefringent polarization beam displacer 214, as shown in Figure 2B, and is reflected by surface 217. The output beam 211 thus produced is directed along a significantly different optical path from output beam 212 and passes through LC pixel 225. LC pixel 225 modulates the polarization of output beam 211 as necessary for the beam to be attenuated by absorptive polarizer 253. After passing through either absorptive polarizers 253 or 254, wavelength channel λ1 is combined, or multiplexed, with other wavelength channels, e.g., λ2 and/or λ3, by diffraction grating 230 to form an upper output beam 243 or a lower output beam 244, wherein the upper output beam 243 is optically coupled to a first output port 241 and the lower output beam 244 is optically coupled to a second output port 242. First output port 241, second output port 242, lower output beam 243, and upper output beam 244 are shown in Figure 2A. Hence, WSS 200 may selectively direct each wavelength channel contained in input beam 220 to one of two output ports, and, in addition, may attenuate any of the wavelength channels as desired.

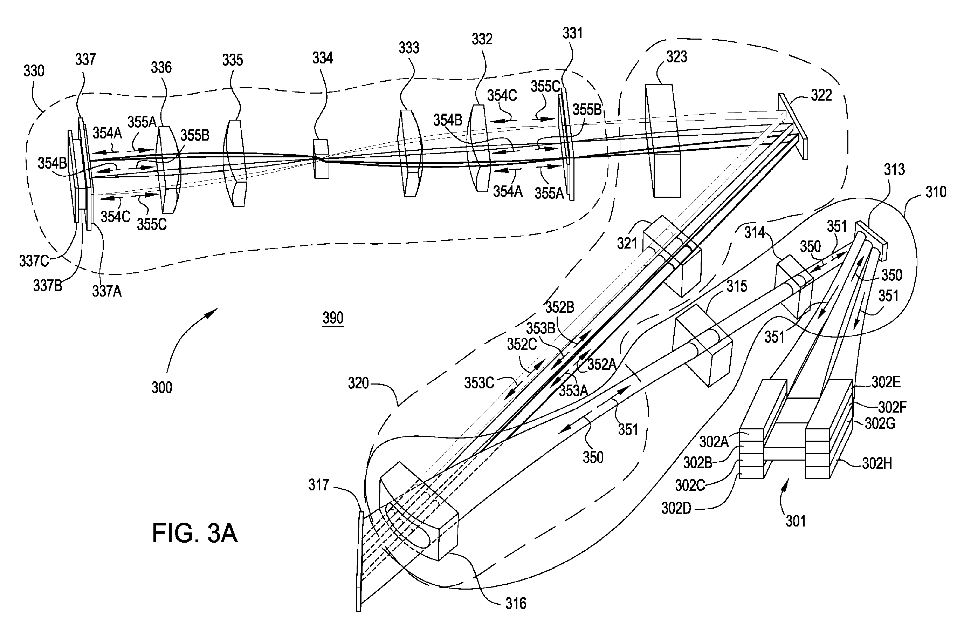

Figure 3A is a perspective view of a WSS according to another embodiment of the invention. In the configuration shown, WSS 300 is a 1 x 4 WSS and includes an optical input port 301, an optical output port array 302, a first beam shaping/steering section 310, a diffraction grating 317, a second beam shaping/steering section 320, and a switching optics assembly 330. The components of WSS 300 are mounted on a planar surface 390 that is herein defined as the horizontal plane for purposes of description. In this configuration, WSS 300 performs wavelength separation in the horizontal plane and switching selection in the vertical plane.

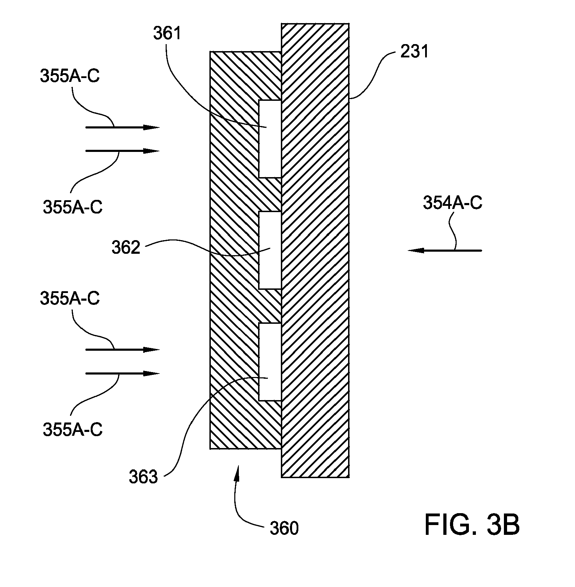

For illustrative purposes, inbound light beams 350, 352A-C, 354A-C, and outbound light beams 351, 353A-C, 355A-C are shown in Figure 3 to more clearly indicate the optical coupling of various elements of WSS 300. Because of the bidirectional nature of most components of WSS 300, light beams are directed along parallel inbound and outbound paths simultaneously between optical components of WSS 300. The inbound and outbound paths are displaced from each other vertically, and this vertical displacement is further described below. For clarity, a single light beam is used in Figure 3 to schematically represent both an inbound and outbound light beam between two optical components of WSS 300 rather than two beams that are vertically displaced with respect to one another. For example, inbound light beam 350 and outbound light beam 351 are schematically represented by a single light beam between folding mirror 313 and diffraction grating 317.

Optical input port 301 optically couples a wavelength division multiplexed (WDM) optical input signal (not shown) to WSS 300. Optical output port array 302 is, in the configuration shown in Figure 3, positioned proximate input port 301. Optical output port array 302 includes four vertically aligned optical output ports 302A-D and four vertically aligned loss ports 302E-H. Optical output ports 302A-D act as the optical output interface between WSS 300 and other components of a WDM optical communication system. Loss ports 302E-H serve as termini for light beams consisting of unwanted optical energy, for example wavelength channels blocked from a WDM output signal.

First beam shaping/steering section 310 includes a folding mirror 313, beam steering unit 314, and cylindrical lenses 315 and 316. First beam shaping/steering section 310 optically couples diffraction grating 317 with optical input port 301 and optical output port array 302, and shapes inbound beam 350 and outbound beam 351. First beam shaping/steering section 310 is also configured to direct outbound beam 351 to either a loss port or an optical output port contained in optical output port array 302, depending on the polarization state of outbound beams 353A-C. Inbound beam 350 and outbound beam 351 may each contain a plurality of wavelength channels that are multiplexed into a single, "white" beam. Beam steering unit 314 is configured to direct outbound beam 351 along two different optical paths depending on the polarization state of outbound beam 351. The two paths may be separated in the horizontal plane by an angular or translational offset

Diffraction grating 317 is a reflective diffraction grating configured to spatially separate, or demultiplex, each wavelength channel of inbound beam 350 by directing each wavelength along a unique optical path. In so doing, diffraction grating 317 forms a plurality of inbound beams, wherein the number of inbound beams corresponds to the number of optical wavelength channels contained in inbound beam 350. In Figure 3, diffraction grating 317 is shown to separate inbound beam 350 into three inbound beams 352A-C. However, in practice, the number of optical channels contained in inbound beam 350 may be up to 50 or more. Because the separation of wavelength channels by diffraction grating 317 takes place horizontally in the configuration shown in Figure 3, spectral resolution is enhanced by widening inbound beam 350 in the horizontal plane, as performed by cylindrical lens 316. Diffraction grating 317 also performs wavelength combination, referred to as multiplexing, of outbound beams 353A-C into outbound beam 351.

Second beam shaping/steering section 320 includes a folding mirror 322, cylindrical lenses 316, 321, and a focusing lens 323. Second beam shaping/steering section 320 optically couples diffraction grating 317 with switching optics assembly 330, shapes inbound beams 352A-C and outbound beams 353A-C, and focuses inbound beams 352A-C on the first element of switching optics assembly 330, i.e., beam polarization unit 331.

Switching optics assembly 330 includes an LC-based beam polarization unit 331, collimating lenses 332, 333, a beam steering unit 334, collimating lenses 335, 336, and an LC-based beam polarization and steering unit 337. The elements of switching optics assembly 330 are optically linked to enable the optical routing of a WDM optical input signal entering optical input port 301 to any one of the optical output ports 302A-D or loss ports 302E-H. The optical routing is performed by conditioning (via LC polarization) and vertically displacing inbound beams 352A-C to produce outbound beams 353A-C. Switching optics assembly 330 selectively determines the vertical displacement of outbound beams 353A-C to correspond to the vertical position of the desired output port, i.e., optical output port 302A, 302B, 302C, or 302D, hence performing a 1x4 optical switching operation. In addition, switching optics assembly 330 may selectively condition each of inbound beams 352A-C to allow independent attenuation or blocking thereof. Further, switching optics assembly 330 performs the 1x4 switching operation with a high extinction ratio. Lastly, switching optics assembly 330 allows switching of outbound beam 351 between optical output ports 302A-D to be "hitless," i.e., without the transmission of a signal to unwanted output ports, such as inactive output ports.

Beam polarization unit 331 includes a bistable LC switching array 360 (shown in Figure 3B) and an array of transparent electrodes, which together are configured to condition the polarization of each of inbound beams 352A-C and produce inbound beams 354A-C. LC switching array 360 and the array of transparent electrodes are also configured to condition the polarization state of outbound beams 355A-C so that each beam, and therefore each wavelength channel of outbound beam 351, may be independently attenuated or directed to one of loss ports 302E-H. Because the LC switching array consists of bistable LCs, optical switching and attenuation are performed with low energy consumption and, in the event of power loss, may be maintained at the current state. The electrodes are arranged vertically and horizontally to define individual LC pixels, the pixels being optically coupled to inbound or outbound beams as described below in conjunction with Figure 3B.

Figure 3B illustrates a schematic side view of beam polarization unit 331, inbound beams 354A-C, and outbound beams 355A-C. Bistable switching array 360 includes three horizontal arrays 361-363 of bistable LCs. Each horizontal array 361-363 contains a plurality of bistable LC pixels, one corresponding to each wavelength channel demultiplexed from inbound beam 350 by diffraction grating 317. Each bistable LC pixel contained in bistable switching array 360 may be similar in operation and organization to LC assembly 101 in Figure 1A. Each of inbound beams 355A-C are directed through a corresponding bistable LC of horizontal array 362. Each of outbound beams 355A-C are directed through a corresponding bistable LC of horizontal array 361 and/or horizontal array 363 via up to four vertically displaced optical paths, as shown. How outbound beams are directed along up to four possible optical paths is described below in regard to beam steering unit 334 and beam polarization unit 237.

Referring back to Figure 3A, beam steering unit 334 is configured to direct inbound beams 354A-C along two different optical paths, i.e., an upper and a lower path, depending on the polarization state of the beams. Hence, beam steering unit operates in a similar manner to birefringent beam steering unit 102 of Figure 1A, or Wollaston prism 121 of Figure 1B. As noted above, the polarization state of inbound beams 354A-C is determined by the polarization conditioning performed by beam polarization unit 331. The two optical paths are separated angularly or by a translational offset in the vertical direction. In either case, the vertical offset between the two possible paths for inbound beams 354A-C indicates that inbound beams 354A-C may be directed to either an upper or lower region of beam polarization and steering unit 337. Beam steering unit 334 is also configured to direct outbound beams 355A-C back through beam polarization unit 331.

Similar to beam polarization unit 331, beam polarization and steering unit 337 includes an LC array 337A containing bistable LCs and a plurality of transparent control electrodes. Beam polarization and steering unit 337 further includes a birefringent crystal 337B (e.g., a YVO₄ crystal) and a reflective element 337C (e.g., a mirror). Beam polarization and steering unit 337 is configured to direct each incident beam, i.e., inbound beams 354A-C, along two different parallel optical paths, separated by a vertical offset, depending on the polarization conditioning by LC array 337A. Since each of inbound beams 354A-C may be directed to beam polarization and steering unit 337 along two possible sets of optical paths from beam steering unit 334, i.e., an upper path or lower path, outbound beams 355A-C may be directed from beam polarization and steering unit 337 along any of four vertically displaced optical path sets.

An advantage of the WSS 300 described above is that wavelength-selective functionality is preserved even if there is an accidental loss of power in the system or a loss of power due to required system maintenance. Since dynamically routing the wavelengths of input light to different output ports is an important part of telecommunication systems, a WSS that maintains its performance even in the absence of a continuous application of an electric field provides an improvement over prior art systems.

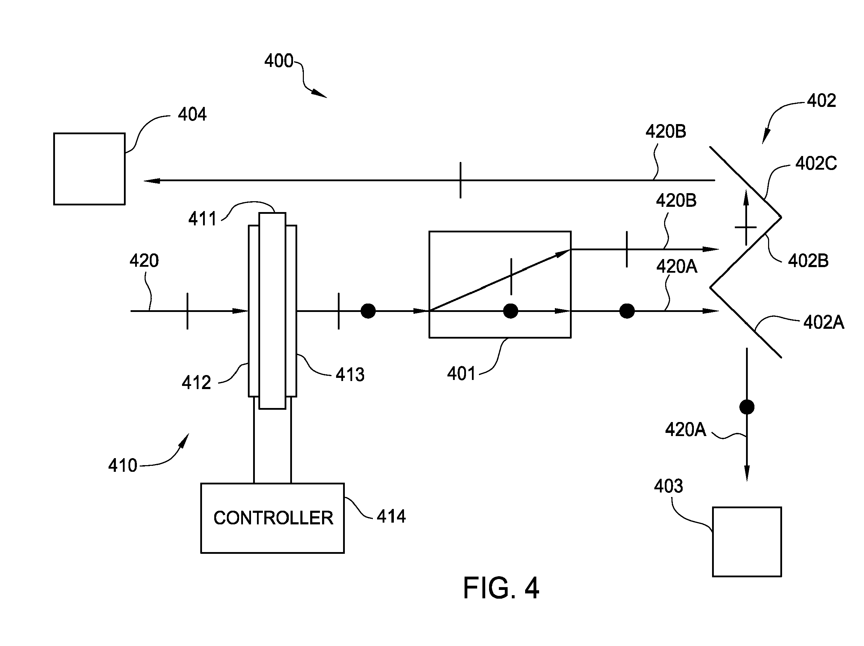

A variable optical attenuator (VOA) is a voltage-controlled device suitable for optical power management in an optical network, e.g., the dynamic attenuation of an optical input signal to a desired power level. Figure 4 schematically illustrates a bistable LC-containing VOA in accordance with one embodiment of the invention. VOA 400 includes a bistable LC assembly 410, a mirror array 402, and a birefringent beam steering unit 401, which is positioned to optically couple optical input signal 420 to one or more elements of mirror array 402. The elements of mirror array 402 optically couple a beam 420A to a loss port 403 and/or an attenuated beam 420B to an optical output port 404. A VOA with the configuration illustrated in Figure 4 is used for purposes of illustration; other configurations of LC-based VOA may also benefit from the incorporation of a bistable LC.

In the example illustrated, bistable LC assembly 410 includes a bistable LC 411 positioned between a first electrode 412 and a second electrode 413. Bistable LC 411 may be substantially similar in organization and operation to LC assembly 101 of Figure 1A. First electrode 412 and second electrode 413 are configured to apply and remove a potential difference across bistable LC 411. A controller 414 controls the electric field intensity, pulse waveform, and other factors as necessary to set a bistable LC material contained in bistable LC 411 to a desired molecular orientation. Birefringent beam steering unit 401 may be a birefringent beam displacer, such as a YVO₄ cube or Wollaston prism. In the example illustrated in Figure 4, birefringent beam steering unit 401 is a YVO₄ cube oriented to separate linearly polarized beam 420, when directed from bistable LC assembly 410, into two beams 420A, 420B, as shown. Mirror array 402 may include a reflective element 402A, positioned to direct beam 420A to loss port 403, and reflective elements 402B, 402C, positioned to direct attenuated beam 420B to output port 404.

In operation, VOA 400 accepts an optical input signal, i.e., beam 420. In the example illustrated in Figure 4, beam 420 is a beam of 100% p-polarized light. Controller 414 applies and removes a potential difference as required between first electrode 412 and second electrode 413 to orient the bistable LC material contained in bistable LC 411 to a desired molecular orientation. Bistable LC assembly 410 conditions the polarization state of beam 420 as the beam passes therethrough. For example, for 50% attenuation of beam 420, bistable LC 411 is arranged to rotate the polarization of beam 420 by 45°, thereby modifying beam 420 to contain 50% s-polarized and 50% p-polarized light. Birefringent beam steering unit 401 converts the portion of unwanted optical energy of beam 420, *i.e.,* the s-polarized component, into beam 420A, which is then directed to loss port 403 via reflective element 402A. Concurrently, birefringent beam steering unit 401 converts the attenuated portion of beam 420, *i.e.,* the p-polarized component, into beam 420B, which is then directed to output port 404 via reflective elements 402B, 402C. Because the application of an electric field is only required to change the attenuation level produced by VOA 400, VOA 400 requires substantially less power for operation over prior art, LC-based VOAs. In addition, VOA 400 is configured to maintain its current attenuation level after loss of power.

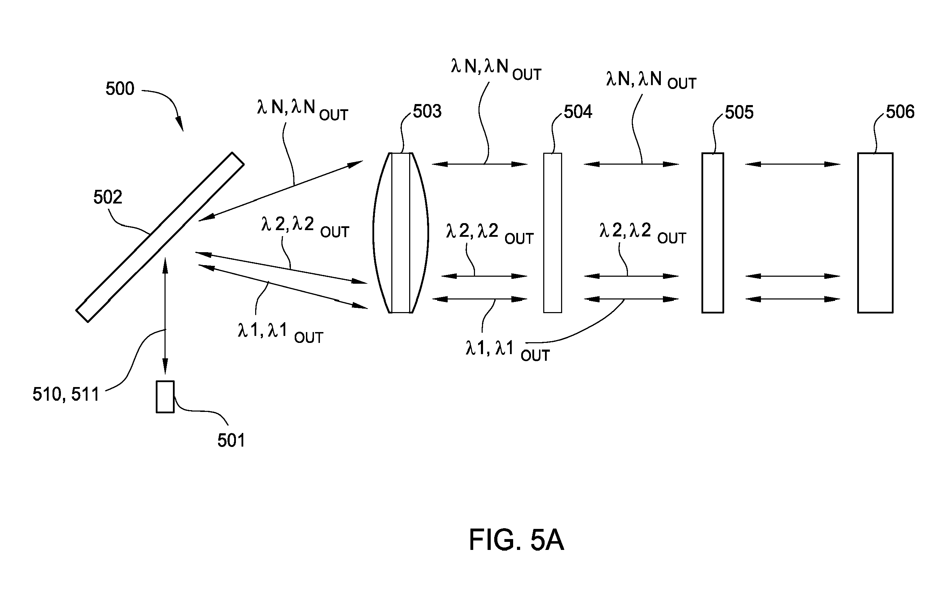

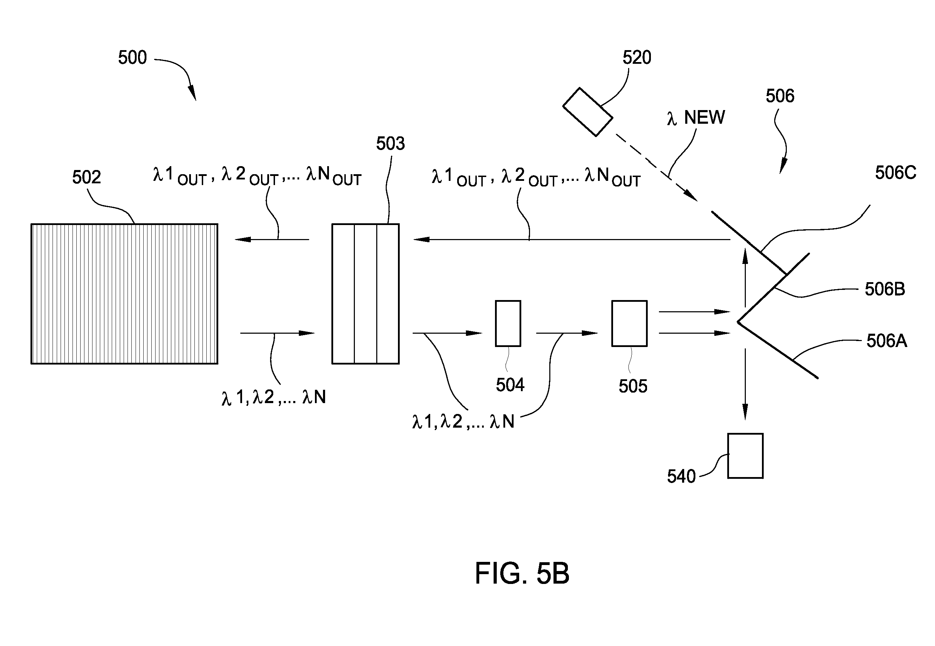

An optical add-drop multiplexer (OADM) is a device used in wavelength-division multiplexing (WDM) systems for multiplexing and routing different wavelength channels into or out of a single mode fiber (SMF). "Add" and "drop" refer to the capability of the device to add one or more wavelength channels to an existing multi-wavelength WDM signal, and/or to drop one or more channels, in some cases routing the dropped signals to another network path. Figures 5A and 5B schematically illustrate top plan and side views, respectively, of a bistable LC-based OADM in accordance with one embodiment of the invention. In the example illustrated in Figures 5A and 5B, OADM 500 includes an input/output port assembly 501, a diffraction grating 502, a lens 503, an LC array 504, a beam steering device 505, and a mirror array 506.

A WDM input signal, beam 510, is optically coupled to diffraction grating 502 by input/output port assembly 501. Diffraction grating 502 demultiplexes beam 510 into a plurality of N wavelength channels λ1-λN, which are optically coupled to LC array 504 by lens 503. Beam 510 is incident on a lower region of diffraction grating 502, and, as shown in Figure 5B, wavelength channels λ1-λN exit diffraction grating 502 along a lower plane than that traveled by output wavelength channels λ1_{OUT}-λN_{OUT}.

LC array 504 contains a plurality of LC pixels (not shown for clarity), one corresponding to each of wavelength channels λ1-λN. Each LC pixel of LC array 504 may be controlled independently, and may be substantially similar in organization and operation to LC assembly 101, described above in conjunction with Figure 1A, including the use of a bistable LC material. As wavelength channels λ1-λN pass through LC array 504, the polarity of each wavelength channel is conditioned as required. Wavelength channels that are to continue through OADM 500, which are known as "cut-through light paths," are conditioned with a first polarization state, and wavelength channels that are to be dropped are conditioned with a second polarization state that is orthogonal to the first. For example, wavelength channels that correspond to cut-through light paths may be p-polarized and wavelength channels that correspond to dropped/re-routed light paths may be s-polarized, or vice-versa.

After conditioning by LC array 504, wavelength channels λ1-λN pass through beam steering device 505, which is substantially similar to birefringent beam steering unit 102 of Figure 1A, or Wollaston prism 121 of Figure 1B. Hence, beam steering device 505 steers each wavelength channel along an upper optical path or a lower optical path, as depicted in Figured 5B, depending on the polarization state of each wavelength channel. In this way, beam steering device 505 directs dropped wavelength channels to a reflective element 506A of mirror array 506, and directs cut-through light paths to a reflective element 506B of mirror array 506.

Reflective element 506A, which is a fixed reflective element contained in mirror array 506, directs dropped wavelength channels to network path 540. Network path 540 may serve as a drop port for dropped wavelength channels or as a loss port for blocked wavelength channels. Reflective element 506B, also a fixed reflective element of mirror array 506, is positioned to redirect all cut-through light paths back to input/output port assembly 501 via reflective element 506C, lens 503, and diffraction grating 502, as illustrated in Figure 5B. Diffraction grating 502 multiplexes the incident wavelength channels, i.e., output wavelength channels λ1_{OUT}-λN_{OUT}, into WDM output beam 511. Hence, OADM 500 may selectively drop or re-route any of wavelength channels λ1-λN as required. Because OADM 500 utilizes bistable LC pixels for conditioning wavelength channels λ1-λN, OADM 500 may perform channel blocking and/or re-routing using lower power consumption than prior art, LC-based OADMs, and can continue a channel blocking/re-routing function during power loss.

In addition to channel blocking and re-routing, OADM 500 may also add one or more new wavelength channels to an existing multi-wavelength WDM signal. In this case, network path 520 (shown in Figure 5B) may be positioned to input additional wavelength channels to WDM output beam 511. For the configuration of OADM 500 shown in Figures 5A and 5B, reflective element 506C may be an array of moveable optical devices to enable OADM 500 to incorporate additional wavelength channels λ_{NEW} into WDM output beam 511. In one example, the array consists of a plurality of independently controllable optical devices, such as MEMS mirrors, wherein each device corresponds to a wavelength channel. Alternatively, other methods of adding wavelength channels to WDM output beam 511 may be used, such as optical-electrical-optical (OEO) methods.

Dynamic gain equalizers (DGEs) are frequently implemented in optical networks to equalize the signal strength of the various wavelength channels in a WDM optical signal. Equalization of wavelength channels is often necessary since each channel may lose optical signal power at different rates while progressing through a network. In accordance with one embodiment of the invention, OADM 500, as illustrated in Figures 5A and 5B, may perform the equalization functions of an LC-based DGE with less power consumption than prior art, LC-base DGEs.

Referring to Figure 5B, it is noted that LC array 504 may independently condition the polarization state of each of wavelength channels λ1-λN, since LC array 504 dedicates an independently controlled LC pixel for each of wavelength channels λ1-λN. Further, in the example illustrated in Figures 5A, 5B, OADM 500 is configured to route cut-through light paths back to input/output port assembly 501, and dropped light paths to a loss port, such as network path 540. Hence, by operating each LC pixel of LC array 504 in a manner substantially similar to that described for VOA 400 of Figure 4, OADM may serve as an LC-based DGE for beam 510. Namely, by selectively modulating the polarization of each wavelength channel λ1-λN that passes through LC array 504, OADM 500 may attenuate each wavelength channel as required to produce a uniform gain profile for WDM output beam 511. Modulation of the polarization of each wavelength channel is performed by rotating the polarization of the channel between 0° and 90°, as described above in conjunction with Figure 1A.

Utilizing bistable LCs allows OADM 500 to block any combination of wavelength channels while simultaneously equalizing the remaining channels without supplying continuous voltage to the LCs. In addition to the configuration of OADM 500 described herein, it is contemplated that other configurations of LC-based DGEs may also benefit from the incorporation of bistable LC elements.

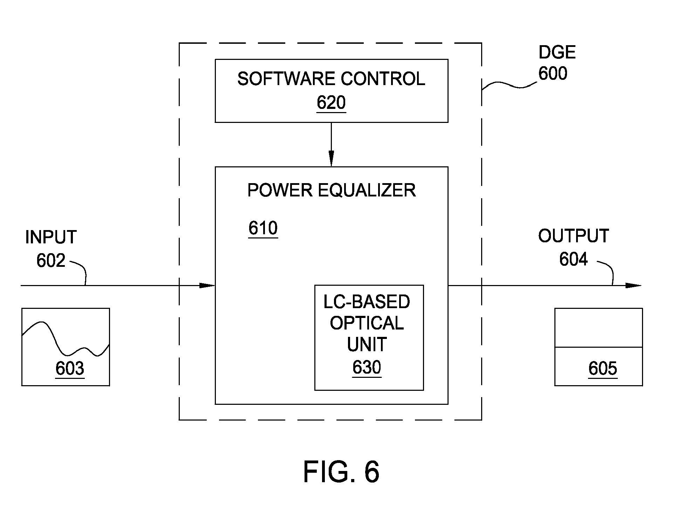

Figure 6 is a conceptual block diagram of a DGE system that incorporates an LC-based DGE as described above. As shown, the DGE system 600 includes a power equalizer 610 and a software control unit 620. The power equalizer 610 includes a bistable LC-based optical unit 630. A single, broadband optical input light beam 602 comprising multiple wavelengths with uneven amplitudes (as conceptually depicted in block 603) travels through the power equalizer 610, where the bistable LC-based optical unit 630 is used to equalize the amplitudes of the different wavelengths and produce an output light beam 604 with equal amplitudes across the wavelength spectrum (as conceptually depicted in block 605). Thus, the DGE system 600 provides a flattened gain profile by generating a well-controlled "attenuation vs. optical wavelength" response that compensates for the unevenness of the gain profile of a light beam generated from another optical component, such as, for example, an optical amplifier. Because the gain equalization has to be done continuously, employing bistable LC-based optical unit 630 that is able to maintain its performance even when no voltage is applied to the liquid crystals within bistable LC-based optical unit 630 results in decreased power consumption by the DGE system 600.

While the foregoing is directed to embodiments of the present invention, other and further embodiments of the invention may be devised without departing from the basic scope thereof, and the scope thereof is determined by the claims that follow.

## Claims

1. An optical device having at least one input port and at least one output port, for receiving a light beam through an input port and selectively directing the light beam to an output port, comprising:
a liquid crystal cell having a first stable state and a second stable state positioned in an optical path of the light beam, the liquid crystal cell polarizing the light beam to have a first polarization state when the liquid crystal cell is in the first stable state and the liquid crystal cell polarizing the light beam to have a second polarization state when the liquid crystal cell is in the second stable state; and
an optical element positioned in the optical path of the light beam for changing the optical path of the light beam based on a polarization state of the light beam.

2. The optical device according to claim 1, wherein the optical element comprises at least one of a bi-refringent crystal and a Wollaston prism.

3. The optical device according to claim 1, wherein the first polarization state has an s-polarization component and a p-polarization component and the second polarization state has an s-polarization component and a p-polarization component.

4. The optical device according to claim 1, wherein the LC cell comprises at least one of cholesteric, smectic and nematic bistable liquid crystals.

5. An optical communications device comprising:
a first port, a second port and a third port; and
an optical switch positioned in an optical path between the first port and the second and third ports, the optical switch including bistable liquid crystals that cause a light beam from the input port to be switched into the second port when a first voltage is applied to the bistable liquid crystals and into the third port when a second voltage is applied to the bistable liquid crystals.

6. The optical communications device according to claim 5, wherein the bistable liquid crystals attain a first stable molecular orientation when the first voltage is applied and a second stable molecular orientation when the second voltage is applied.

7. The optical communications device according to claim 6, wherein the bistable liquid crystals maintain the first stable molecular orientation when the first voltage is removed and maintain the second stable molecular orientation when the second voltage is removed after application.

8. The optical communications device according to claim 5, wherein the bistable liquid crystals have a multiple number of stable molecular orientations and attain one of the stable molecular orientations depending on the voltage applied thereto.

9. The optical communications device according to claim 8, wherein the optical communications device comprises a dynamic gain equalizer.

10. The optical communications device according to claim 8, wherein the optical communications device comprises a variable optical attenuator, and the second port comprises an output port and the third port comprises a loss port.

11. The optical communications device according to claim 8, wherein the optical communications device comprises an optical add-drop multiplexer.

12. A wavelength selective switch comprising:
a light dispersing element for dispersing a single input light beam into multiple wavelength components; and
an optical switch for receiving the multiple wavelength components and directing them to one of multiple directions, wherein the optical switch includes bistable liquid crystals that cause the multiple wavelength components to be switched into a first direction when a first voltage is applied to the bistable liquid crystals and into a second direction when a second voltage is applied to the bistable liquid crystals.

13. The wavelength selective switch according to claim 12, wherein the light dispersing element is configured to receive the multiple wavelength components that passed through the optical switch and combine the multiple wavelength components into a single output light beam.

14. The wavelength selective switch according to claim 13, further comprising at least one input port through which the input light beam travels and at least two output ports through one of which the output light beam travels.

15. The wavelength selective switch according to claim 14, further comprising a light reflecting element for reflecting the multiple wavelength components that were switched by the optical switch.

16. The wavelength selective switch according to claim 12, wherein the bistable liquid crystals attain a first stable molecular orientation when the first voltage is applied and a second stable molecular orientation when the second voltage is applied.

17. The wavelength selective switch according to claim 16, wherein the bistable liquid crystals maintain the first stable molecular orientation when the first voltage is removed and maintain the second stable molecular orientation when the second voltage is removed after application.

18. The wavelength selective switch according to claim 17, wherein the multiple wavelength components are at a first polarization state after passing through the optical switch having the first voltage applied thereto and a second polarization state after passing through the optical switch having the second voltage applied thereto.

19. The wavelength selective switch according to claim 18, wherein the optical switch comprises a beam steering unit that switches the multiple wavelength components into the first direction or the second direction based on their polarization state.

20. The wavelength selective switch according to claim 19, wherein the beam steering unit comprises one of a birefringent crystal and a Wollaston prism.
